# EUROPEAN PATENT APPLICATION

(11) **EP 1 887 468 A1**
(43) Date of publication of application: **13.02.2008**
(21) Application number: 06291266.2
(22) Date of filing: 03.08.2006
(51) Int. Cl.: G06F 9/50

(54) **Software communication architecture (SCA) framework extension**

(71) Applicant: Alcatel Lucent, 75008 Paris (FR)
(72) Inventor: Nolte, Dr.Klaus, 13505 Berling (DE); Loewel, Thomas, 12247 Berling (DE)
(74) Representative: Kohler Schmid Möbus

(57) **Abstract**

An extension to the Software Communication Architecture framework (5, 6), SCA, for use in a radio communications system (1), in particular a Software-Defined Radio system, SDR. The proposed extension comprises:
- a first modification (19) of the SCA Software Assembly Descriptor (18), SAD, referencing a number of code files (16.3, 16.4) forming a scalable application (15, 17), said first modification allowing for providing an attribute for specifying a dedicated type of device for executing said application files;
- a second modification (10) of the SCA Device Configuration Descriptor (9.2), DCD, said second modification allowing for defining said dedicated type of device, in particular in the form of an aggregated device;
- a third modification (21, 22) of the SCA class Application (20), said third modification enabling an instance of said class associated with said scalable application (15, 17) to request scaling of said scalable application (15, 17) in accordance with at least one of predefined performance requirements of said given device (7.2, 7.3), predefined performance requirements of said scalable application (15, 17), and predefined performance requirements of the communications system (1).

## Description

### Background of the invention

The present invention relates to an extension to the Software Communication Architecture (SCA) framework for use in a radio communication system, in particular a Software-Defined Radio (SDR) system.

The present invention further relates to a base station for use in a radio communication system, in particular an SDR system, said base station employing the SCA framework for at least one of launching, initialising, configuring, re-configuring, and shutting down applications related to radio transmission.

As known to a person skilled in the art, Software Communication Architecture (SCA), which is an open-architecture framework defined by the Joint Technical Radio System (JTRS) initiative of the United States Department of Defence provide a component-based application design defining a framework under which software applications can be developed for SDRs, has been found to form a good basis for SDR software configuration/re-configuration.

However, conventional SCA is not adapted to provide application scaling capability, which is a major issue in SDR communication systems in the context of limited hardware performance and changing load situations.

In the present context, scaling capability denotes the possibility to run a scalable (adaptable) number of application component instances in response to predefined performance requirements.

### Object of the invention

It is the object of the present invention to provide application scaling capability in the context of an SCA framework in order to overcome limited hardware performance and to deal with changing load situations in SDR communication systems.

### Summary of the invention

According to a first aspect of the present invention the object is achieved by providing an SCA extension of the above-defined type comprising:
- a first modification of the SCA Software Assembly Descriptor, SAD, referencing a number of code files forming a scalable application, said first modification allowing for providing an attribute for specifying a dedicated type of device for executing said application files;
- a second modification of the SCA Device Configuration Descriptor, DCD, said second modification allowing for defining said dedicated type of device, in particular in the form of an aggregated device;
- a third modification of the SCA class Application, said third modification enabling an instance of said class associated with said scalable application to request scaling of said scalable application in accordance with at least one of predefined performance requirements of said given device, predefined performance requirements of said scalable application, and predefined performance requirements of the communications system.

According to a second aspect of the present invention the object is achieved by providing a base station of the above defined type wherein the SCA framework comprises the SCA extension according to said first aspect of the present invention.

Thus, in accordance with a general idea underlying the present invention, the latter specifies the required changes (in the form of said first through third modifications) in the respective Document Type Descriptions (DTD) to provide means for application scaling or scalable hardware handling.

With respect to a given application comprising a number of code files, in a further embodiment of the present invention only a limited number of said code files may effectively constitute a scalable application, i.e., only a sub-group of a total number of code files in an application do form said scalable application. In the present document, said code files, i.e., respective instances created therefrom will also be referred to as components or component instances. Furthermore, said sub-group of code files will also be referred to as a component group.

In an embodiment of the extension in accordance with the present invention, said extension provides means for requesting addition of at least one instance of said scalable application on a device of said dedicated type of device and/or means for requesting removal of at least one instance of said scalable application from a device of said dedicated type of device. Preferably, said means are provided in the form of functions defined in said Application class.

As will be appreciated by a person skilled in the art, no reference to a specific device is required for application scaling, as a scalable application will always be associated with a dedicated type of device while devices - through their respective DCD - may be identified as being of said dedicated type, thus allowing for dynamic placement of component instances of a required type of devices, i.e., application scaling. For instance, a scalable application related to base-band processing may comprises an attribute indicated that a "base-band board"-type of device is required for placing additional component instances if additional base-band processing is required in a particular situation.

In a further embodiment of the present invention the proposed SCA extension comprises a modification of the SCA Device Manager, said Device Manager being operable to maintain a list of devices of at least said dedicated type in accordance with said attribute. In this way, SCA is made fully consistent with the concept of aggregated devices, a feature which may be advantageously employed for application scaling and which will be explained in detail farther down. Said list and the corresponding devices are created at system start-up and is therefore available during system operation for locating devices eligible for application scaling, i.e., for placing additional component instances, in accordance with said attribute.

In another embodiment of the SCA extension in accordance with the present invention said Application class is adapted to obtain information from said list of devices of said dedicated type, in particular via the SCA Domain Manager, in order to request scaling of said scalable application. For instance, if a given scalable application requires instantiation of additional component instances in order do fulfil a predefined performance requirement, a corresponding instance of said Application may consult said list via the SCA Domain Manager and may request addition of further component instances to a given device of said dedicated type, if the latter - in its current - state is not able to provide a required system performance, i.e., in terms of a number of served users or the like.

Furthermore, in yet another embodiment of the SCA extension in accordance with the present invention a reference to said given device may lead to the addition of a further instance of said scalable application to said given device if said given device has spare processing capacity.

In a further embodiment of the SCA extension in accordance with the present invention said predefined performance requirements, in particular for a start-up configuration, are stored in at least one of a respective SCA Software Component Descriptor (SCD) and Software Assembly Descriptor (SAD) for said application files. Said descriptor files are typically provided in the form of XML (Extendable Markup Language) documents. In this way, (re-)configuring can be achieved by simple editing of the corresponding XML document.

In a corresponding embodiment of the present invention the proposed SCA extension comprises providing means for changing said predefined performance requirements at deployment time, in particular in response to load feedback information and/or operator input.

In a further embodiment of the present invention the proposed SCA extension comprises providing means for automatically scaling said scalable application, in particular by adding and/or removing instances of said scalable application running on said given device, in accordance with a current performance status of the communications system. This can be achieved, e.g., by providing a system load monitor is is adapted to trigger said automatic modification in case of need.

In yet another embodiment of the present invention the proposed SCA extension comprises providing means for automatically scaling said scalable application, in particular by adding and/or removing instances of said scalable application running on said given device, in accordance with a hardware status of the communication system.

The present invention is not limited to executing scalable application on a number of single data processing elements: In a further embodiment of the SCA extension in accordance with the present invention said given device is devised as a composite device comprising a plurality of data processing elements, e.g., a base-band board.

Further advantages and characteristics of the present invention can be gathered from the following description of preferred embodiments given by way of example only with reference to the enclosed drawings. Features mentioned above as well as below can be used in accordance with the present invention either individually or in conjunction. The described embodiments are not to be regarded as an exhaustive enumeration but rather as examples of a general concept underlying the present invention.

### Brief description of the drawings

- Fig. 1: is a schematic block diagram of an SDR communication system;
- Fig. 2: is a detailed block diagram of the extended SCA framework in accordance with an embodiment of the present invention for use in the base station of Fig. 1;
- Fig. 3: is a code listing for illustrating an aspect of the SCA extension in accordance with the present invention; and
- Fig. 4: is another code listing illustrating an aspect of the SCA extension in accordance with the present invention.

### Detailed description

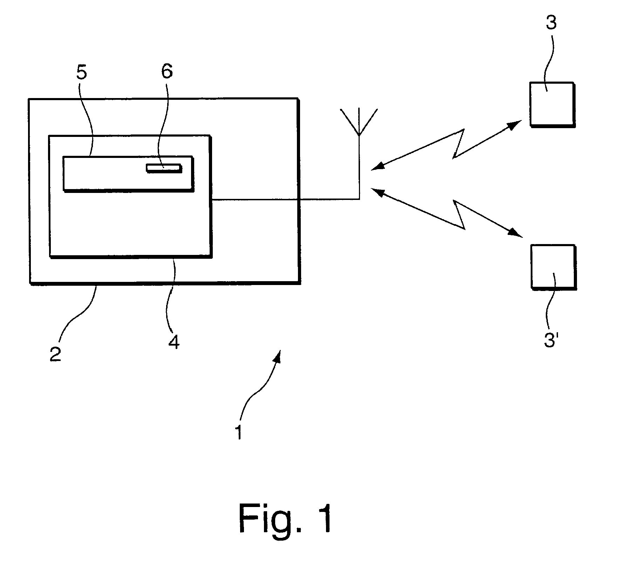

**Fig. 1** shows a schematic block diagram of an SDR communication system **1**. Communication system **1** comprises a number of base stations **2**, only one of which is depicted for reason of clarity, in operative connection with a number of user equipments **3, 3'** (e.g., mobile terminals). Base station 2 is devised in the form an SDR-capable base station and thus comprises SDR means **4** for running a number of radio applications (not shown in Fig. 1), either one at a time or in parallel, as known to a person skilled in the art. An SDR application profile of base station 2 is a matter of software configuration and software re-configuration, which is generally triggered by a base station operator (not shown). Generally, configuration constraints for SDR means 4 are expressed in terms of load requirements, e.g., processing capacity for a given type of radio service at a given time of day.

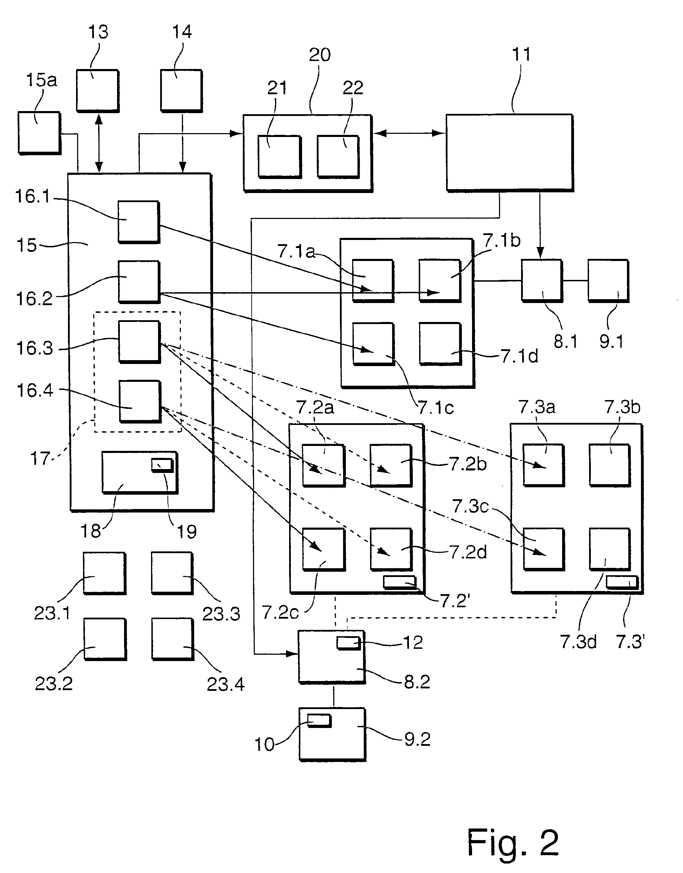

SDR means 4 further comprises an implementation of the SCA framework 5. Said SCA implementation comprises an embodiment of the SCA extension 6 as proposed by the present application. A detailed overview of said SCA implementation 5 and extension 6 (hereinafter also referred to as extended SCA framework 5, 6) will now be given with reference to appended Fig. 2.

**Fig. 2** shows a detailed block diagram of the extended SCA framework in accordance with an embodiment of the present invention for use in the base station of Fig. 1.

The extended SCA framework 5, 6 comprises a number of devices **7.1, 7.2, 7.3, ...,** e.g., base-band boards, each comprising a plurality of data-processing elements **7.1a-d, 7.2a-d, 7.3a-d**, e.g., in the form of General Purpose Processors (GPP), Digital Signal Processors (DSP), Field-Programmable Gate Arrays (FPGA), or the like. As known from conventional SCA, each device 7.1-7.3 is associated with a Device Manager **8.1, 8.2** associated with a respective Device Component Descriptor (DCD) **9.1, 9.2,** typically an XML document, which may be provided directly on the respective device. In the embodiment of Fig. 2, at least DCD 9.2 comprises a modification **10** in accordance with an embodiment of the present invention, as will become apparent later.

Device Managers 8.1, 8.2 are operatively connected with SCA Domain Manager **11**. Domain Manager 11 and the Device Managers 8.1, 8.2 belong to the so-called SCA Core Framework (CF). Device Manager 8.2 maintains a list **12** of devices, e.g., devices 7.2, 7.3, so-called aggregated devices, a purpose of which will become apparent later. Said list 12, together with devices 7.1-7.3 as such, is created at system start-up and is therefore available for controlling system operation.

For identification purposes, particularly in the context of aggregated devices, at least devices 7.2, 7.3 in Fig. 2, maintain a type property **7.2', 7.3'** (e.g., "base_band_ board"), as also mentioned above. Thus, in the embodiment of Fig. 2, Device Manager 8.2 effectively functions as a Device Manager for an aggregated device which comprises devices 7.2 and 7.3, as indicated by means of dashed lines in Fig. 2, a purpose of which will be explained in detail below.

The embodiment of Fig. 2 further depicts load-determining or monitoring means **13** and input means **14**, which will also be described in detail below, in operative connected with an application **15** which is constituted of a plurality of component code files **16.1-16.4** for execution on said data-processing elements 7.1 a-d, 7.2a-d in the form of component instances. Code files 16.3, 16.4 are grouped in the form of a component group **17** illustrated by means of a dashed box. In an embodiment of the present invention, code files 16.3, 16.4, i.e., executable instances of said code files, can be replicated to provide application scalability, as will become apparent later.

However, the invention is not limited to scalable replica of a plurality of code files in the form of component groups.

Application 15 is operatively connected with a specific control component **15a**. Application 15 further comprises Software Assembly Descriptor (SAD) **18** comprising modification **19** with respect to conventional SCA framework in accordance with an aspect of the present invention. SAD 18 is typically devised as an XML file.

For every running application, e.g. application 15, there is a dynamical SCA core framework representation in the form of an instance of an Application class **20**. As depicted in Fig. 2, Application class 20 comprises two functions **21**, **22**, namely a function "addComponentGroup" and "removeComponentGroup", respectively, a purpose of which will also be described later.

For every installed software component, i.e. code files 16.1-16.4, the extended SCA framework 5, 6 of Fig. 2 comprises a Software Component Descriptor (SCD) **23.1-23.4,** typically in the form of a respective XML document.

Operation of the extended SCA framework will now be explained with reference to appended Fig. 2:
In order to manage the various software pieces or resources which make up an application, e.g. application 15, Domain Manager 11 creates an instance of a proxy (Application) interface based on Application class 20, hereinafter also referred to as the "Application". The Application 20 provides a dynamical structure containing run-time information for a running application, e.g., process IDs for all created components and/or a list of the devices (hardware), e.g., devices 7.1-7.3, on which the active resources of a given application are currently deployed.
In other words: When starting an application, e.g. application 15, within the extended SCA framework 5, 6, an instance of class Application 20 comprising the addComponentGroup function 21 and the removeComponentGroup function 22 is created. Application 15 is composed of a number of pieces or resources which, within the context of SCA, are all capable of running on separate processors. As already stated above, in the present example application 15 comprises code files 16.1-16.4, instances of which may be executed on suitable devices, e.g., devices 7.1-7.3.

For application instantiation, the Application proxy 20 reads the SAD 18 associated with application 15 including modification 19, whereupon a so-called SCA ApplicationFactory (not shown) is created, which in turn creates the application 15. SAD 18 particularly comprises definitions of required connections between components in terms of provided and used ports/interfaces, a definition on needed connections to devices (hardware), and a definition on any collocation (deployment) dependencies. The Application Factory uses this information to create the application, e.g., application 15.

In the present example, code files 16.1, 16.2., i.e., the corresponding component instances are processed by means of data-processing elements 7.1 a and 7.1 b, c on device 7.1, respectively (solid arrows in Fig. 2). Device 7.1 can be identified with a control board, and components 16.1, 16.2 implement specific control functions that need not be scalable. Furthermore, code files 16.3, 16.4, i.e., the corresponding resources are processed on data-processing elements 7.2a, 7.2c, respectively, of device 7.2. Said components 16.3, 16.4 of component group 17 can be identified with an application the requires scalability with respect to a load situation of the SDR communication system 1 (Fig. 1)

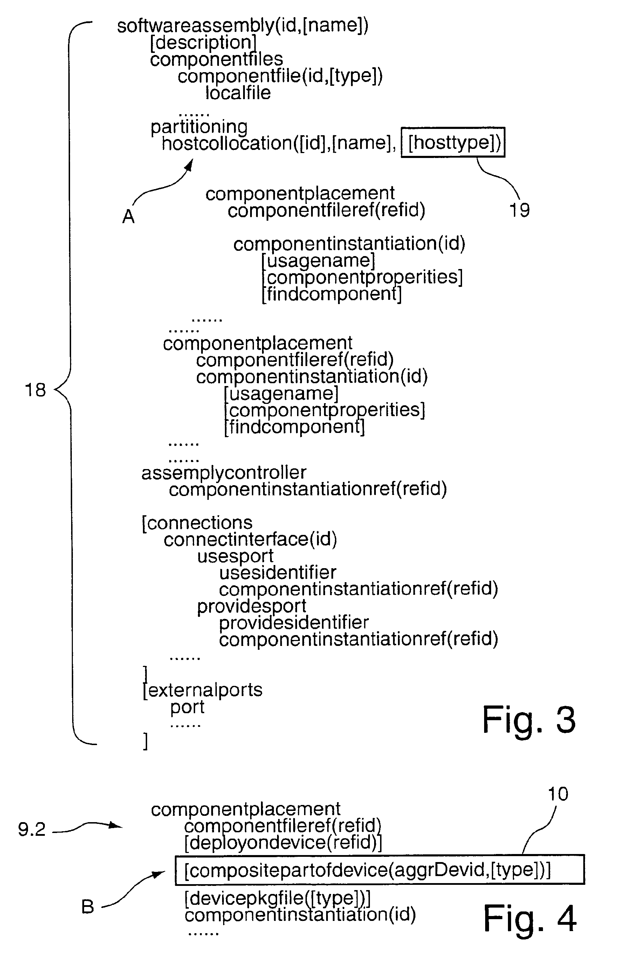

As already stated above, modification 19 of SAD 18 indicates that code files 16.3, 16.4 of application 15 form a scalable component group 17, i.e., a scalable application, as will now be explained with reference to appended Fig. 3.

**Fig. 3** shows a (pseudo-)code listing for illustrating an aspect of the SCA extension in accordance with the present invention.

A typical case in connection with telecommunication infrastructure is scalable hardware, i.e., the number of active processing boards (devices 7.1, 7.2, 7.3, ...) varies dependent on performance requirements for a given infrastructure node. Using additional boards or devices to perform a given processing task, e.g., base-band processing, may allow to increase system performance for a given application by installing a group of software components, i.e. component group 17, multiple times, thus increasing the number of system users that may be processed or supported in parallel at a given time. Installing application software, in particular in the form of said component groups, multiple times is a suitable task for the SCA Core Framework and is therefore implemented as a general function in the context of the present invention. However, the corresponding application description (SAD 18) had to be extended (modification 19) with respect to conventional SCA in order to inform the framework on the software components, i.e. code files/resources 16.3, 16.4 in the example of Fig. 2, that can be replicated.

In the context of SCA, the SAD 18 is provided in the form of an XML document, a general structure of which is reflected in Fig. 3 (using a more readable format).

In accordance with an embodiment of the present invention, it is proposed to use the "hostcollocation" construct of SAD 18 to identify a scalable/replicatable group of software components, i.e. component group 17, that shall run together on a given hardware device (such as a board), e.g. device 7.2 of Fig. 2. In Fig. 3, said hostcollocation construct is indicated by means of arrow **A**. To achieve this, an additional attribute "hosttype" is needed with respect to conventional SCA to identify the type of device that shall be used. As further indicated in Fig. 3, said additional attribute can be identified with said modification 19 of SAD 18 (cf. Fig. 2). This change in the software assembly Document Type Description (DTD) provides the means for scalable handling of hardware. The hosttype attribute allows placement of all component instances of said component group on a common type of device without having to explicitly specify said device, i.e., only the device type is required.

In order to thoroughly achieve the desired application scalability, in the present embodiment of the invention the Device Manager, e.g. Device Manager 8.2, is made compatible with the concept of aggregated devices, i.e. a plurality of hardware devices of a given type (e.g., base band boards) which work together and in parallel to process multiple component instances of the resources in a given software component group, e.g., code files 16.3, 16.4 in software component group 17 of Fig. 2. This is indicated by means of dash-dotted arrows in Fig. 2 which indicate placement of component replicas of code files 16.3, 16.4 (i.e., the respective replica component instances) on processing elements 7.3a, 7.3c of device 7.3, respectively. However, as further indicated by means of dashed arrows in Fig. 2, said further component instances do not necessarily have to be placed on further device 7.3 in case device 7.2 still has sufficient processing capacity to host said additional component instances, as indicated by means of the associated Device Manager 8.2.

It should be noted that conventional SCA is not thoroughly consistent with aggregated devices. Therefore, in a corresponding embodiment of the present invention it is proposed to extend definition of the SCA Device Manager object by adding functionality for maintaining said list 12 of aggregated devices, i.e., a number of individual devices, such as devices 7.2, 7.3 in Fig. 2, which may serve as a processing basis for multiple instances of respective software components. Said list is denoted by means of reference numeral 12 in Fig. 2 and has already been mentioned above.

In other words, decision on which devices are available for placing component instances of a scalable application is based on information comprised in list 12 maintained by the associated Device Manager 8.2.

For defining of an aggregated device, DCD 9.2 (which is a static XML document) has been modified accordingly. This will now be explained with reference to appended Fig. 4.

**Fig. 4** shows another (pseudo-)code listing illustrating an aspect of the SCA extension in accordance with the present invention. As indicated in Fig. 4, the XML Device Configuration Descriptor 9.2, which may be provided on device/board 7.2, uses the field "compositepartofdevice" in its "componentplacement" section to reference the identifier (ID) of an aggregated device, as indicated by means of arrow B. Said ID is attributed to a given device (aggregated or not) at system start-up and may be used to identify said device during system operation. As can further be gathered from Fig. 4, the field "compositepartofdevice" can be identified with DCD modification 10 of Fig. 2. If this ID ("aggrDevld") is processed for the first time at system start-up, a new aggregated device of type "type" is created, and the device in question (e.g., device/board 7.2 of Fig. 2) is added to said aggregated device. Further references to the same ID, e.g., in the case of device/board 7.3, lead to an addition of respective devices. Said type "type" is referenced as "hosttype" in SAD 18 of Fig. 3 (cf. reference numeral 19). All devices, e.g., devices 7.2, 7.3, forming an aggregated device are referenced in said list 12 maintained in the associated Device Manager 8.2 (Fig. 2), such that Device Manager 8.2 has knowledge about currently aggregated devices 7.2, 7.3, ... at all times during system operation.

As already stated above, a running application, e.g. application 15, is represented within the SCA core framework by an instance of class Application which forms a proxy to Domain Manager 11. If SAD 18 of a given application comprises said modification 19, i.e. a number of software components are specified as being replicable, then application 15 may request addition or removal of component instances to/from an aggregated device 7.2, 7.3 via Application 20/ Domain Manager 11 by means of said functions 21, 22. The latter can be identified with a modification of the SCA class Application, said modification enabling an instance of said class associated with said scalable application 15, 17 to request scaling of said scalable application..

The latter process may be triggered by dedicated operator input through input means 14, e.g., in accordance with a presumed load situation, time of day, or the like. Additionally or alternatively, said process may be triggered via said automatic load monitoring means 13. Domain manager 11 then contacts the associated Device Manager 8.2 to find out if sufficient processing capacity is available on said aggregated device to fulfil the request. If necessary, and if the hardware situation permits, additional component instances may be placed on said aggregated device in order to be able to fulfil performance requirements.

In this way, the present invention allows collocation of software component instances on aggregated devices, wherein an aggregated device may also be a single processing board, a DSP group on a board, or the like. That is, the present invention is not limited to embodiments wherein a plurality of individual devices are "tied" in the form of an aggregated device. This is achieved by suitably modifying the SAD by specifying a device class, e.g., base-band board, which shall be used for scalable component placement. The SCA core framework interprets this kind of description in a way that permits multiple component instantiations until predefined performance requirements are fulfilled or until all available hardware resources are busy, e.g., all of the processing elements on devices belonging to an eligible type of (aggregated) device are running component instances in connection with a given scalable application. Note that in general collocation of component instances on a specific (i.e., individualised) device is not required. However, this may optionally provide a further useful feature in the context of the present invention.

Note that the description of conditions for running a given software component, i.e., any one of source files 16.1-16.4 in Fig. 2, remains in the SCA Software Package Descriptor (SPD; not shown in Fig. 2). These conditions may be expressed by specifying a processor type, an operating system and/or other software components that shall run on the same device, e.g., when requiring a special driver component.

Furthermore, the SCDs 23.1-23.4 and/or SAD 18 of Fig. 2 may comprise performance requirements for respective single software components in terms of requirements for a single processor (data-processing element) hosting an instance of this component. Additionally, performance requirements are specified for the whole system, e.g., within Domain Manager 11. The latter can be achieved in several ways, wherein the simplest way is to provide an absolute number of component instances needed with respect to a given application (for a given load situation, time of day, or the like). Furthermore, a number of processed instructions per second and per processor type can be specified. In this way, the SCA core framework can take into account the load situation when launching a given application, e.g. application 15 in Fig. 2.

In order to support system re-configuration, application-specific control component 15a is required which is adapted to react to re-configuration requests of an operator, wherein the latter may be input through input means 14. Said application-specific control component 15a receives said re-configuration requests and re-writes the performance requirements for the application components (i.e., code files 16.1-16.4 in Fig. 2) by modifying SAD 18 and/or SCDs 23.1-23.4. After that, control component 15a causes the SCA framework to adapt the configuration of a running application (provided that the application in question is currently being executed).

## Claims

1. An extension to the Software Communication Architecture framework (5, 6), SCA, for use in a radio communications system (1), in particular a Software-Defined Radio system, SDR, **characterised by**:
- a first modification (19) of the SCA Software Assembly Descriptor (18), SAD, referencing a number of code files (16.3, 16.4) forming a scalable application (15, 17), said first modification allowing for providing an attribute for specifying a dedicated type of device for executing said application files;
- a second modification (10) of the SCA Device Configuration Descriptor (9.2), DCD, said second modification allowing for defining said dedicated type of device, in particular in the form of an aggregated device;
- a third modification (21, 22) of the SCA class Application (20), said third modification enabling an instance of said class associated with said scalable application (15, 17) to request scaling of said scalable application (15, 17) in accordance with at least one of predefined performance requirements of said given device (7.2, 7.3), predefined performance requirements of said scalable application (15, 17), and predefined performance requirements of the communications system (1).

2. The extension of claim 1, **characterised in that** said third modification provides means (21) for requesting addition of at least one instance of said scalable application (15, 17) on a device of said dedicated type of device and/or means (22) for requesting removal of at least one instance of said scalable application (15, 17) from a device of said dedicated type of device.

3. The extension of claim 1, **characterised by** a modification of the SCA Device Manager (8.2), said Device Manager being operable to maintain a list (12) of devices (7.2, 7.3) of said dedicated type in accordance with said attribute.

4. The extension of claim 1, **characterised in that** a reference to said given device leads to an addition of a further instance of said scalable application (15, 17) to said given device (7.2, 7.3) if said given device has spare processing capacity.

5. The extension of claim 1, **characterised in that** said predefined performance requirements, in particular for a start-up configuration, are stored in at least one of a respective SCA Software Component Descriptors (23.1-23.4), SCD, and said SCA Software Assembly Descriptor (18), SAD, for said application files.

6. The extension of claim 1, **characterised by** providing means (13, 14) for changing said predefined performance requirements at deployment time, in particular in response to load feedback information and/or operator input.

7. The extension of claim 1, **characterised by** providing means (13, 21, 22) for automatically scaling said scalable application (15, 17), in particular by adding and/or removing instances of said scalable application (15, 17) running on said given device, in accordance with a current performance status of the communications system (1).

8. The extension of claim 1, **characterised by** providing means (13, 21, 22) for automatically scaling said scalable application (15, 17), in particular by adding and/or removing instances of said scalable application running on said given device, in accordance with a hardware status of the communication system (1).

9. The extension of claim 1, **characterised in that** said given device (7.2, 7.3) is a composite device comprising a plurality of data processing elements (7.2a-d, 7.3a-d) and/or an aggregated device comprising a plurality of devices of said dedicated type.

10. A base station (2) for use in a radio communications system (1), in particular a Software-Defined Radio system, SDR, said base station employing the Software Communication Architecture framework (5, 6), SCA, for at least one of launching, initialising, configuring, re-configuring, and shutting down applications related to radio transmission, **characterised in that** the SCA framework (5, 6) comprises the extension according to any one of claims 1 to 9.
